# EUROPEAN PATENT APPLICATION

(11) **EP 3 715 021 A1**
(43) Date of publication of application: **30.09.2020**
(21) Application number: 19216859.9
(22) Date of filing: 17.12.2019
(51) Int. Cl.: B22F 3/105, B01D 39/10, B01D 46/10, B22F 3/11, B22F 5/10, B33Y 10/00, B33Y 80/00, B01D 39/12

(54) **METAL FILTER AND PRODUCTION METHOD THEREFOR**

(30) Priority: 27.03.2019 JP 2019059830
(71) Applicant: Mitsubishi Hitachi Power Systems, Ltd., Yokohama-shi, Kanagawa 220-8401 (JP)
(72) Inventor: OTA, Atsuo, Yokohama-shi, Kanagawa 220-8401 (JP); IMANO, Shinya, Yokohama-shi, Kanagawa 220-8401 (JP)
(74) Representative: Strehl Schübel-Hopf & Partner

(57) **Abstract**

To provide a metal filter having a small number of production steps and having high filtration performance, and a production method therefor.

A mesh filter portion having a filtration function and a support portion that includes plural beam members supporting the mesh filter portion are seamlessly continuous to each other.

## Description

### BACKGROUND OF THE INVENTION

### 1. Field of the Invention

The present invention relates to a metal filter capable of filtering solids in a fluid, and a production method therefor.

### 2. Description of the Related Art

A metal filter, excellent in heat resistance, pressure resistance, and impact resistance compared to resins, ceramics, glass, and the like, may be used as a filter capable of filtering solids in a fluid. As one type of metal filter, a sintered filter is present which has fine holes formed therein by baking metal powder at a temperature close to its melting point. The sintered filter can exert a high filtration capability because metal particles thereof are sintered in a state that they tangle three-dimensionally with each other. In a case where it is required to improve the filtration capability of the sintered filter is facilitated, a method can be considered, for example, that the particle diameter of the metal powder is miniaturized and a sintered body having a smaller hole diameter is thereby produced or that the thickness of the sintered body is increased. However, with these methods, the pressure loss is significant and the filtration efficiency may be degraded.

In view of this type of problem, JP-2000-185209-A discloses a metal filter that facilitates reduction in pressure loss by increasing its filtration area. More specifically, disclosed is a metal filter produced by integrally sintering a cylindrical support body having unevenness on its outer circumferential surface, with a microfiltration layer that has a thickness with which the microfiltration layer is unable to maintain its shape as a single object against the filtration pressure and that covers the outer circumferential surface, or a covering surface, of the support body. The metal filter is formed such that: the empty hole diameter of the microfiltration layer is smaller than that of the support body; the covering surface, or the outer circumferential surface, of the support body is formed to have unevenness having ridge parts to thereby establish the filtration surface of the microfiltration layer as an undulated filtration surface; the average thickness in groove parts each between the ridge parts of the microfiltration layer is set to be thicker than the average thickness in the ridge parts; and the filtration surface of the microfiltration layer is formed to be a smooth curved surface.

In producing the sintered filter, generally, including the metal filter in JP-2000-185209-A, it is required to prepare molds (the inner mold and the outer mold of JP-2000-185209-A) to be filled with the metal powder to pressurize and sinter the metal powder. Moreover, the sintered filter is difficult to control the diameter of the filter hole due to the properties of the sintering. Furthermore, the degree of freedom in shape of the sintered body is low because of the restriction by the structure of the molds.

In addition, the filter in JP-2000-185209-A still has a room to be improved in the pressure loss because the substantially cylindrical support body is positioned on the overall surface on the inner circumferential surface side of the microfiltration layer.

### SUMMARY OF THE INVENTION

The present invention is conceived in view of the above circumstances and an object of the present invention is to provide a metal filter having a small number of production steps and having high filtration performance, and a production method therefor.

The present application includes plural means that solve the above problems, and as an example thereof, there is provided a metal filter that includes a mesh filter portion, and a support portion having plural beam members that support the mesh filter portion, in which the mesh filter portion and the support portion are seamlessly continuous to each other.

According to the present invention, a metal filter having high filtration performance can easily be produced.

### BRIEF DESCRIPTION OF THE DRAWINGS

Fig. 1 is a perspective diagram of a metal filter according to an embodiment of the present invention;
Fig. 2 is a diagram of the state where a filter portion 10 is removed from the metal filter 1 in Fig. 1;
Fig. 3 is an enlarged diagram of an A section in Fig. 2;
Fig. 4 is a diagram of a state where a support portion 20 is removed from the metal filter 1 in Fig. 1;
Fig. 5 is an enlarged diagram of a B section in Fig. 4;
Figs. 6A to 6C are diagrams schematically depicting modification examples of the positional relation between the filter portion 10 and the support portion 20;
Fig. 7 is a schematic configuration diagram of a powder bed-type 3-D printer;
Fig. 8 is a diagram depicting a six-divided production process for the metal filter 1, executed by the 3-D printer 100; and
Fig. 9 is an example of manufacturing in a case where laser irradiation conditions are varied in the 3-D printer.

### DESCRIPTION OF THE PREFERRED EMBODIMENTS

### First Embodiment

An embodiment of the present invention is be described below with reference to the drawings.

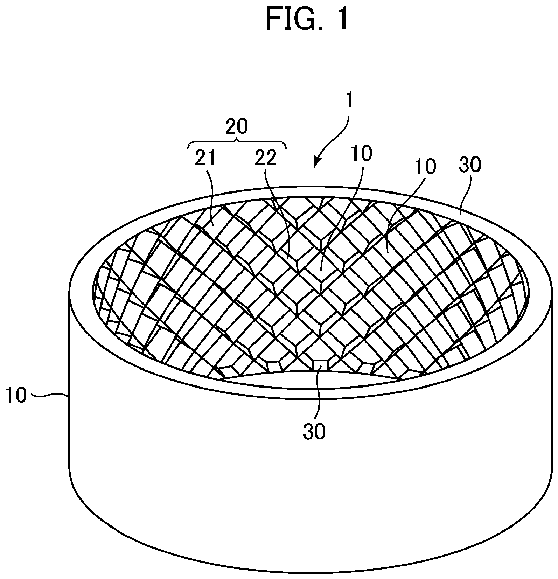

Fig. 1 is a perspective diagram of a metal filter according to the embodiment of the present invention. The metal filter 1 depicted in this drawing is formed into a substantially cylindrical shape, and includes a mesh filter portion, hereinafter, it is referred to as a filter portion, 10 functioning as a filter that filters solids in a fluid, and a support portion 20 including plural beam members 21 and 22 that support the filter portion 10 to enhance the structural strength of the metal filter 1. The filter portion 10 and the support portion 20 are seamlessly continuous to each other in the boundary therebetween. In other words, the filter portion 10 and the support portion 20 are integrally built with each other and are not coupled with each other after each being individually produced. The filter portion 10 and the support portion 20 can be formed using the same metal.

A flat ring-shaped flange portion 30 is provided on each of both ends of the support portion 20 in the axis direction of the metal filter 1, that is, on the upper end and the lower end of the cylindrical shape. The flange portions 30 are similarly integrally built with the filter portion 10 and the support portion 20, and are seamlessly continuous to these portions in the boundaries therebetween. The flange portion 30 may be provided on either one of ends of the support portion 20 or may not be provided .

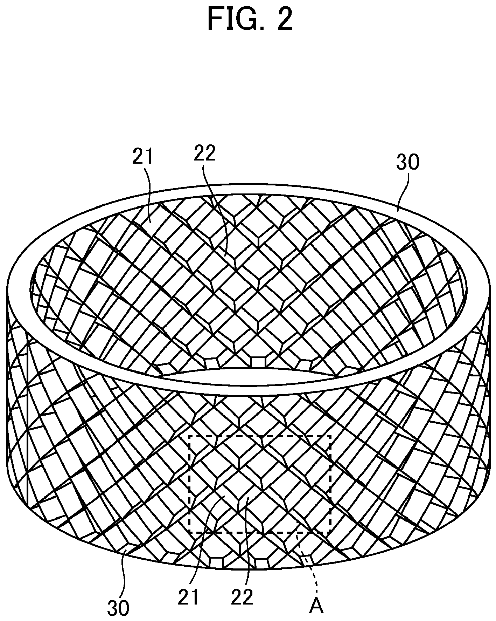

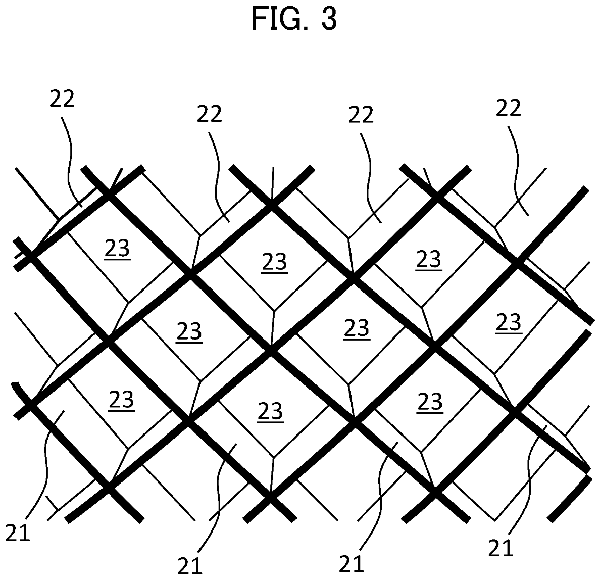

Fig. 2 is a diagram of the state where the filter portion 10 is removed from the metal filter 1 in Fig. 1, and extracts only the support portion 20. Fig. 3 is an enlarged diagram of an A section in Fig. 2.

The plural beam members 21 and 22 are caused to span between the two flange portions 30 that are positioned on the upper end and the lower end in the axis direction of the metal filter 1, and that are placed through an interval in the axis direction of the metal filter 1. The plural beam members 21 and 22 are assembled in a lattice pattern and thereby form plural lattices. In other words, in the support portion 20, plural square lattice-like compartments 23 are formed by the plural first beam members 21 each placed along a first arrangement direction through predetermined intervals and the plural second beam members 22 placed along a second arrangement direction intersecting with the first arrangement direction through a predetermined intervals, similarly with the first beam members 21. The filter portion 10 of the embodiment is placed so as to close the lattice-like compartments 23 from the outer surface side of the metal filter 1.

The plural beam members 21 and 22 of the embodiment each has a width in the radial direction of the metal filter 1. The width is equal to or smaller than the width (a thickness) of the flange portion 30 in the radial direction of the metal filter 1. Note that, the width of each of the plural beam members 21 and 22 is not smaller than the width(the thickness) of the filter portion 10 in the radial direction of the metal filter 1. In other words, comparing in the radial direction of the metal filter 1, the width of each of the plural beam members 21 and 22 is larger than the thickness of the filter portion 10 and is equal to or smaller than the width of the flange portion 30.

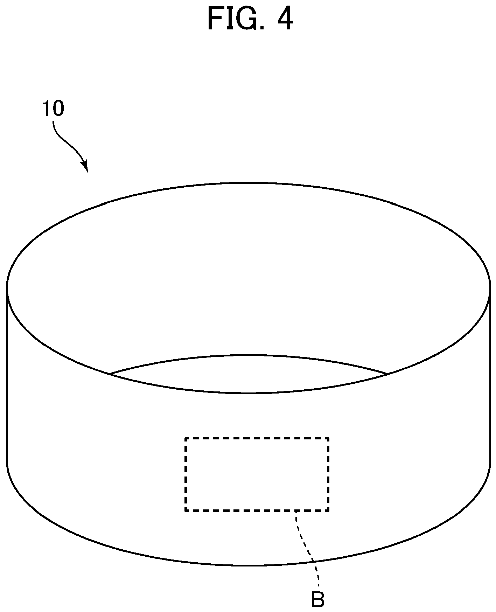

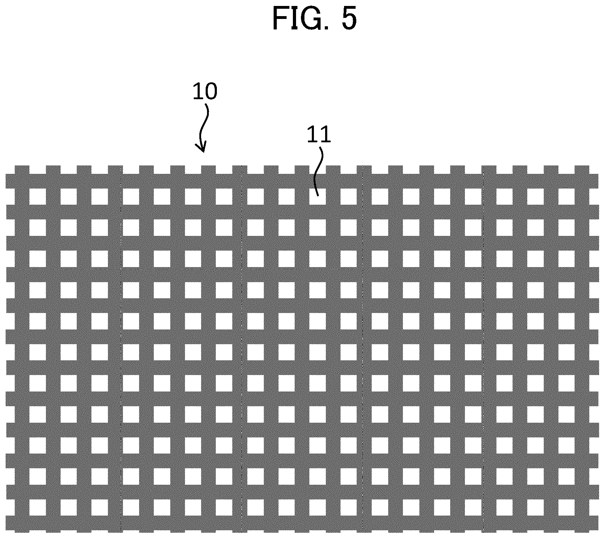

Fig. 4 is a diagram of the state where the support portion 20 is removed from the metal filter 1 in Fig. 1, and extracts and depicts only the filter portion 10. Fig. 5 is an enlarged diagram of a B section in Fig. 4.

As depicted in Fig. 4, the filter portion 10 of the embodiment is formed into a hollow cylindrical shape, and the thickness of the cylinder is the thickness of the filter.

As depicted in Fig. 5, in the filter portion 10, plural straight lines extending in the up-and-down direction (the filter axis direction) and those extending in the right-and-left direction (the filter circumferential direction) intersect with each other at a right angle and thereby form checkerboard grid-like lattices. The shapes of filter holes 11 formed by the lattices are substantially uniform. Although the filter holes 11 in Fig. 5 are each formed to be substantially square, the shape and the size of the filter hole 11 may be varied to a desired shape.

### <Modification Examples>

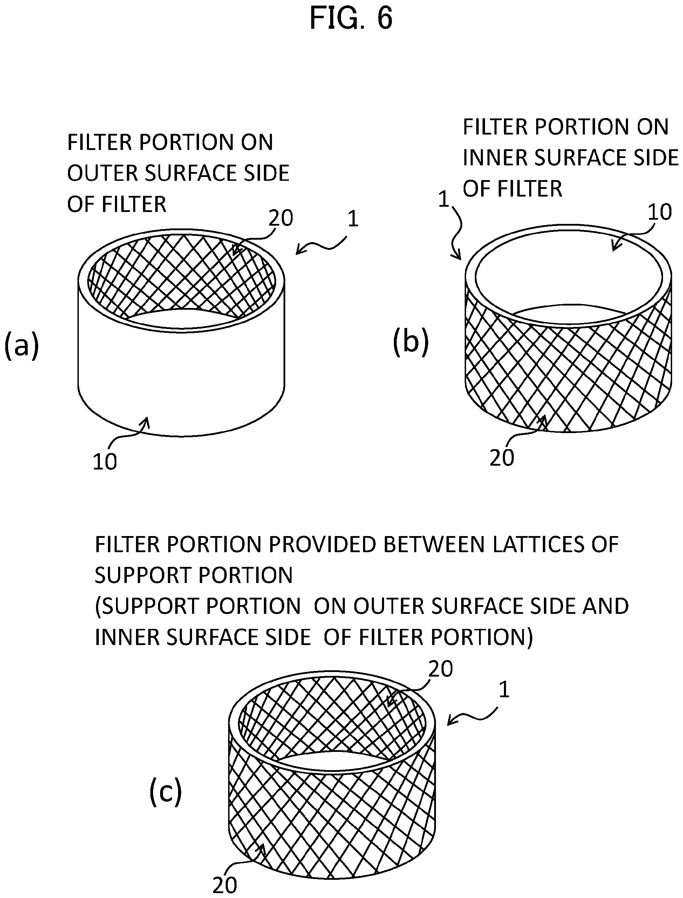

(a)A case where the filter portion 10 is positioned on the outer surface side of the metal filter 1, that is, a case where the support portion 20 is positioned on the inner surface side of the filter portion 10, has been described hereinabove, (b)the filter portion 10 may be positioned on the inner surface side of the metal filter 1, that is, the support portion 20 may be positioned on the outer surface side of the filter portion 10, or (c)the filter portion 10 may be positioned in the lattices, or in the lattice-like compartments 23, of the support portion 10, that is, the support portion 20 may be positioned on each of both of the inner surface side and the outer surface side of the filter portion 10. Figs. 6A to 6C are diagrams schematically depicting the positional relations between the filter portion 10 and the support portion 20 for the cases of the above (a), (b), and (c), respectively.

For example, the position of the support portion 20 can appropriately be selected from (a) to (c) in accordance with the direction in which a fluid passes through the filter portion 10 (a filtration direction). Moreover, when the support portion 20 is provided on each of both of the inner surface side and the outer surface side of the filter portion 10 as in the case of (c), the filter portion 10 can be supported on both sides of the inner surface side and the outer surface side, and the structural strength of the metal filter 1 can therefore be improved.

### <Production Method>

The metal filter 1 is produced by integrally building the filter portion 10 and the support portion 20 with each other using additive manufacturing. Specific techniques of the additive manufacturing include: a powder bed technique in which, after bedding metal powder, part of the metal powder to be manufactured is melted using a laser or an electron beam that acts as a heat source and then solidified; and a metal deposition technique in which a melted metal material is stacked at a predetermined location and then solidified for manufacturing. The former technique includes a laser beam type that uses a laser beam as the heat source and an electron beam type that uses an electron beam as the heat source. The latter technique includes a laser beam type in which metal powder is sprayed and simultaneously melted using a laser beam, and an arc discharge type in which a metal wire is melted using arc discharge.

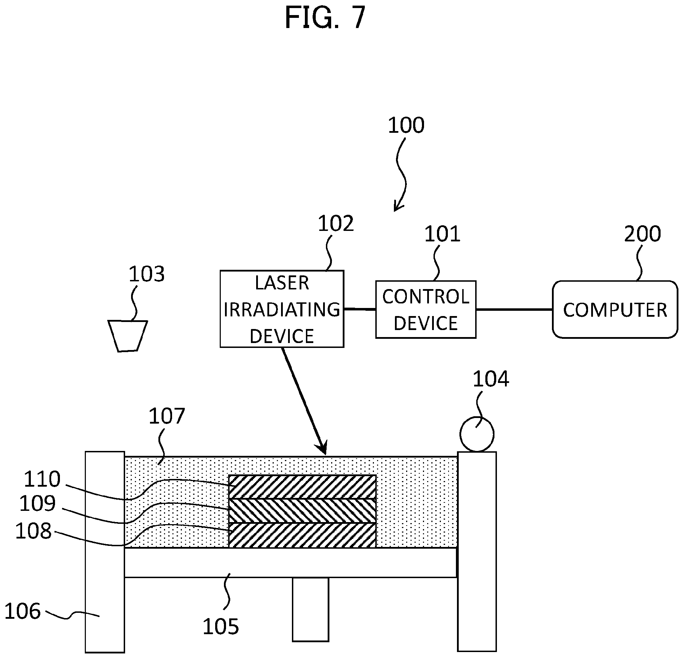

An apparatus that produces the metal filter 1 using the additive manufacturing includes a metal 3-D printer and, in the embodiment, the metal filter 1 is produced using the metal 3-D printer of the powder bed type. Fig. 7 is a schematic configuration diagram of a powder bed-type 3-D printer. As depicted in the drawing, the powder bed-type 3-D printer 100 includes a control device 101, a laser irradiating device 102, a powder injecting unit 103, a coater 104, a base plate 105, and a production container 106.

The control device 101 controls, for the 3-D printer 100, the output power and the position of the laser irradiation of the laser irradiating device 102, the position of the base plate 105, control of the coater 104, and injection of metal powder 107 by the powder injecting unit 103. The controls of the components of the 3-D printer 100 by the control device 101 are performed on the basis of structure data (three-dimensional model data) of the metal filter 1, that is, a three-dimensional manufacturing object, created by a computer 200. Thus, the 3-D printer 100 builds the metal filter 1 using the additive manufacturing.

When the metal filter 1 is built using the 3-D printer 100, the metal powder 107 to be melted and solidified by the laser irradiation is first injected on the base plate 105, that is, from the powder injecting unit 103 toward the inside of the production container 106.

The coater 104 is next controlled to flatten the surface of the metal powder 107. A laser irradiation is thereafter performed by the laser irradiating device 102 in accordance with the structure of the metal filter 1 to thereby selectively melt and then solidify the metal powder 107. Thus, a first layer deposit portion 108 is built.

The base plate 105 is next lowered to build a second layer deposit portion 109. The metal powder 107 is injected again. The coater 104 is controlled to flatten the surface of the metal powder 107. A laser irradiation is performed by the laser irradiating device 102, and the second layer deposit portion 109 is built.

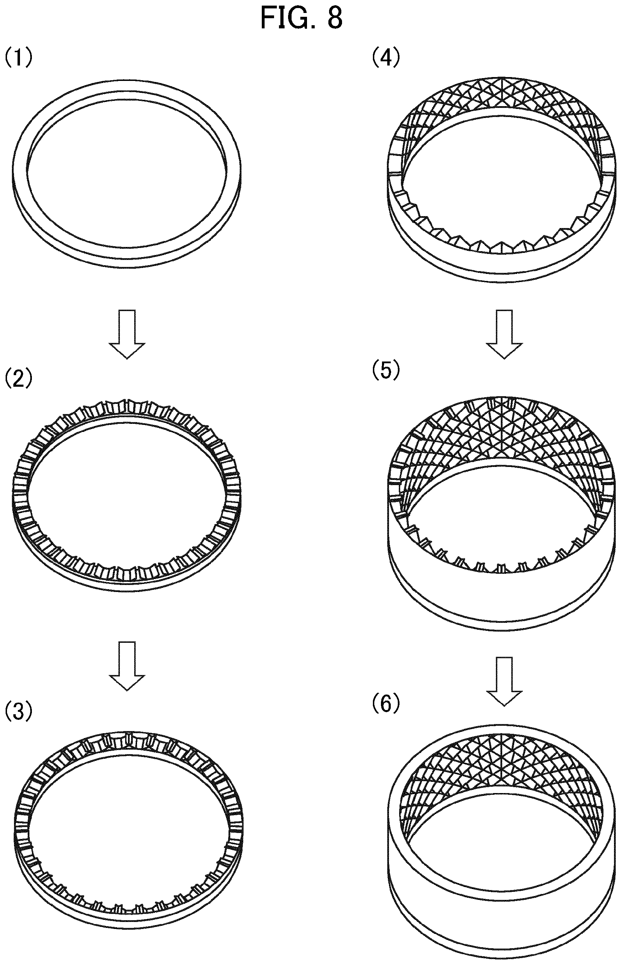

The 3-D printer 100 builds the metal filter 1 by repeating this. In short, the 3-D printer 100 builds a three-dimensional manufacturing object by melting and solidifying the powder 107 injected into the production container 106. Fig. 8 is a diagram depicting a six-divided production process for the metal filter 1, executed by the 3-D printer 100, and time elapses in the order of (1), (2), (3), (4), (5), and (6) of the drawing while the filter portion 10 and the support portion 20 are integrally built with each other without being built separately from each other.

Regarding the above, the laser irradiation of the laser irradiating device 102 is executed with predetermined laser irradiation output power and at a predetermined scanning velocity through the control by the control device 101 such that all the metal particles present in the range of the laser irradiation are melted and solidified. Alternatively, the laser irradiation conditions may be partially varied from the laser irradiation conditions ordinarily used such that only a part of the metal particles present in the range of the laser irradiation is melted and solidified, for example, the laser irradiation output power is reduced to be lower than the usual laser irradiation output power while the scanning velocity is set to be the usual scanning velocity or, in contrast, the scanning velocity is increased while the laser irradiation output power is maintained.

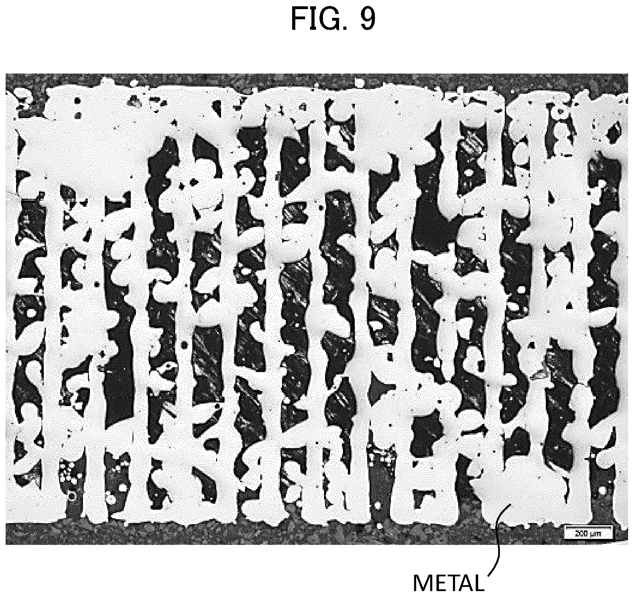

Thus, part of the metal particles is melted or diffusion-bonded to each other, and an irregular shape different from the shape of the metal filter 1 defined by the three-dimensional model data created by the computer 200 appears. This enables the surface area of the manufacturing object to be increased compared to that in a case where the laser irradiation output power is set to be constant. Accordingly, in a case where a catalyst function is imparted to the filter portion 10, for example, if the laser irradiation conditions are varied from the usual irradiation conditions to increase the surface area of the filter portion 10, the contact area between a fluid and the catalyst at a time when the fluid passes through the filter portion 10 can be increased. This may enable the reaction to be facilitated. Fig. 9 is an example of manufacturing in a case where the laser irradiation conditions are varied. Note that, Fig. 9 does not depict a part of the metal filter 1.

In addition, although the case where the heat source of the 3-D printer is the laser beam has been described in the above, it is needless to say that an electron beam may be used. Similarly, the metal deposition technique is also usable.

### <Effects>

The metal filter 1 configured as above has the structure having the filter portion 10 and the support portion 20 set to be seamlessly continuous to each other, and having the filter portion 10 been supported by the side faces of the plural beam members 21 and 22 of the support portion 20. Therefore, even when the filtration pressure acts on the filter portion 10 during the use, deformation of the filter portion 10 such as bending can be prevented since the beam members 21 and 22 support the filtration pressure. Thus, the thickness of the filter portion 10 can also be easily reduced. At this time, when the flange portions 30 are provided on both ends in the axis direction of the metal filter 1 and the plural beam members 21 and 22 are caused to span therebetween as described in the above embodiment, the structural strength of the metal filter 1 can further be improved. As above, according to the embodiment, a metal filter excellent in the filtration performance and the pressure resistance can be provided.

Compared to the conventional sintered filter, no significant pressure loss is generated even when the diameter of each of the filter holes 11 is reduced, and the filtration performance can therefore be easily improved. Moreover, the controllability of the filter hole diameter is high compared to that of the sintered filter whose filter hole diameter is difficult to be controlled, and securing desired filtration performance is therefore easy. Furthermore, it is also not necessary to prepare any mold when the filter is to be produced, and the number of production steps is therefore small compared to that of the sintered filter. Therefore, the filtration performance of the metal filter can easily be improved compared to that of the conventional sintered filter.

The 3-D printer 100 is used for producing the metal filter 1 of the embodiment, and the filter portion 10 and the support portion 20 can therefore be integrally built with each other and the number of production steps can significantly be reduced compared to that of the case where the filter portion 10 and the support portion 20 are each individually produced and thereafter coupled with each other. Moreover, the metal filter 1 has the structure having the filter portion 10 supported by the plural beam members 21 and 22 from the lower end up to the upper end in the axis direction of the metal filter 1, and the filter portion 10 and the support portion 20 can therefore be concurrently additive-manufactured at all the production steps of the metal filter 1 by the 3-D printer 100. Further, the metal filter can stably be produced without any deformation of the filter portion 10 whose thickness is small, during the layer stacking. Using the 3-D printer 100, since the shape defined by the three-dimensional model data can faithfully be replicated, the thickness and the hole diameter of the filter hole 11 can easily and accurately be controlled. No restriction is imposed on the positional relation between the filter portion 10 and the support portion 20 compared to the case of the sintered filter production for which molds are used, and a metal filter in accordance with the requirements can therefore be easily produced. Moreover, when the laser irradiation conditions are varied such that part of the metal powder remains in its unmelted state, not only the shape defined by the three-dimensional model data but also an irregular shape can be manufactured. When the surface area of, for example, the filter portion 10 is increased using the method, the contact area between the filter portion 10 and a fluid passing through the filter portion 10 is increased, and a reaction can therefore be easily advanced in such a case where a catalyst function is imparted to the filter portion 10.

### <Others>

In addition, the present invention is not limited to the above embodiment and includes various modification examples within the scope not departing from the gist thereof. For example, the present invention is not limited to the one that includes all the configurations described in the above embodiment, and also includes the one from which part of the configurations is deleted.

Although the square (rhomboid), lattices are formed by the plural beam members 21 and 22 in the support portion 20 in the above, the lattice may have a desired shape. For the shape of the beam members 21 and 22, not limiting to the shapes described above, various shapes can each also be employed only when the shapes each include a side face that is in contact with the filter portion 10. In this case, it is not necessary to form the lattices using the plural beam members.

Although the case where the filter portion 10 has the cylindrical shape has been described in the above, the position of the filter portion 10 relative to the support portion 20 may be varied for each of the lattice-like compartments 23 formed by the support portion 20, for example. In other words, although the filter portion 10 is positioned on the inner surface side of the support portion 20 in one of the lattice-like compartments 23, the filter portion 10 may be positioned on the outer surface side of the support portion 20 in the other the lattice-like compartments 23.

Although the metal filter 1 having the hollow cylindrical shape has been taken as the example in the above, the shape of the filter may appropriately be varied and the present invention is also applicable to a metal filter having, for example, a column-like shape.

In addition, as a specific article to which the above metal filter 1 is applied, a char filter can be considered that is used in a system that collects char (a char collection system) generated in a coal gasification combined cycle power generation and the like. The char is an unreacted solid that is acquired by removing volatile matters and moisture from coal in a gasification furnace and that includes mainly ash and fixed carbon. Controllability of the filter hole diameter, strength, and sulfurization resistance are required to the char filter and the metal filter 1 according to this embodiment is therefore suitable for the char filter.
- 1:: Metal filter
- 10:: Filter portion
- 11:: Filter hole
- 20:: Support portion
- 21:: Beam member
- 22:: Beam member
- 23:: Lattice-like compartment
- 30:: Flange portion
- 100:: 3-D printer
- 101:: Control device
- 102:: Laser irradiating device
- 103:: Powder injecting unit
- 104:: Coater
- 105:: Base plate
- 106:: Production container
- 107:: Metal powder
- 108:: First layer deposit portion
- 109:: Second layer deposit portion
- 110:: Third layer deposit portion
- 200:: Computer

## Claims

1. A metal filter (1) comprising:
a mesh filter portion (10); and
a support portion (20) that includes a plurality of beam members (21, 22) supporting the mesh filter portion (10), **characterized in that**
the mesh filter portion (10) and the support portion (20) are seamlessly continuous to each other.

2. The metal filter according to claim 1, wherein
the mesh filter portion (10) and the support portion (20) are formed using a same metal.

3. The metal filter according to claim 1, wherein
the mesh filter portion (10) is formed in a cylindrical shape, and
the support portion (20) is positioned on at least one of an inner surface side and an outer surface side of the mesh filter portion (10).

4. The metal filter according to claim 3, further comprising:
a flange portion (30) that is provided on at least one of an upper end and a lower end of the metal filter (10), wherein
the flange portion (30) is seamlessly continuous to the mesh filter portion (10) and the support portion (20).

5. The metal filter according to claim 3, wherein
a width of each of the plurality of beam members (21, 22) in a radial direction of the mesh filter portion (10) is larger than a thickness of the mesh filter portion (10) in the radial direction of the mesh filter portion (10).

6. The metal filter according to claim 1, wherein
the plurality of beam members (21, 22) form a plurality of lattices by being assembled in a lattice pattern.

7. The metal filter according to claim 6, wherein
the mesh filter portion (10) is formed to be positioned in an inside of each of the plurality of lattices.

8. A production method for a metal filter (1), comprising:
creating three-dimensional model data of a metal filter (1) that includes a mesh filter portion (10) and a support portion (20) including a plurality of beam members (21, 22) that support the mesh filter portion (10); and
integrally building the mesh filter portion (10) with the support portion (20) by melting and solidifying metal powder using a metal three-dimensional printer (100) on a basis of the three-dimensional model data.

9. The production method for a metal filter according to claim 8, wherein
when the mesh filter portion (10) is manufactured at the integrally building the mesh filter portion (10) with the support portion (20), part of metal particles is melted by partially varying irradiation conditions of a laser beam or an electron beam of the metal three-dimensional printer.
